# FASCICULE DE BREVET EUROPEEN

(11) **EP 3 496 964 B1**
(45) Date de publication et mention de la délivrance du brevet: **08.07.2020**
(21) Numéro de dépôt: 17754742.9
(22) Date de dépôt: 21.07.2017
(51) Int. Cl.: B60H 1/00, F25B 5/04, F25B 25/00, B60H 1/22

(54) **CIRCUIT DE CLIMATISATION INVERSIBLE INDIRECT DE VÉHICULE AUTOMOBILE ET PROCÉDÉ DE FONCTIONNEMENT CORRESPONDANT**
INDIREKTER REVERSIBLER KLIMAANLAGENKREISLAUF FÜR EIN KRAFTFAHRZEUG UND ZUGEHÖRIGES BETRIEBSVERFAHREN
INDIRECT REVERSIBLE AIR-CONDITIONING CIRCUIT FOR A MOTOR VEHICLE AND CORRESPONDING OPERATING METHOD

(30) Priorité: 30.08.2016 FR 1658035
(43) Date de publication de la demande: 19.06.2019
(73) Titulaire: Valeo Systemes Thermiques, 78320 Le Mesnil Saint Denis (FR)
(72) Inventeur: BENOUALI, Jugurtha, 78322 Le Mesnil Saint-Denis Cedex (FR)
(74) Mandataire: Tran, Chi-Hai
(86) Numéro de dépôt international: PCT/FR2017/052016
(87) Numéro de publication internationale: WO 2018/042091

(56) Documents cités:
- FR-A1- 3 028 016

## Description

L'invention se rapporte au domaine des véhicules automobiles et plus particulièrement à un circuit de climatisation de véhicule automobile et son procédé de fonctionnement.

Les véhicules automobiles actuels comportent de plus en plus souvent un circuit de climatisation. Généralement, dans un circuit de climatisation « classique », un fluide réfrigérant passe successivement dans un compresseur, un premier échangeur de chaleur, appelé condenseur, placé en contact avec un flux d'air extérieur au véhicule automobile pour libérer de la chaleur, un dispositif de détente et un deuxième échangeur de chaleur, appelé évaporateur, placé en contact avec un flux d'air intérieur du véhicule automobile pour le refroidir.

Il existe également des architectures de circuit de climatisation plus complexes qui permettent d'obtenir un circuit de climatisation inversible, c'est à dire qu'il peut absorber de l'énergie calorifique dans l'air extérieur au niveau du premier échangeur de chaleur, appelé alors évapo-condenseur, et la restituer dans l'habitacle notamment au moyen d'un troisième échangeur de chaleur dédié.

Cela est possible notamment en utilisant un circuit de climatisation indirect. On entend par indirect ici que le circuit de climatisation comporte deux boucles de circulation de deux fluides distincts (comme par exemple un fluide réfrigérant et de l'eau glycolée) afin d'effectuer les différents échanges de chaleur.

Le circuit de climatisation comprend ainsi une première boucle de fluide réfrigérant dans laquelle circule un fluide réfrigérant, une deuxième boucle de fluide caloporteur dans laquelle circule un fluide caloporteur, et un échangeur de chaleur bifluide agencé conjointement sur la première boucle de fluide réfrigérant et sur la deuxième boucle de fluide caloporteur, de façon à permettre les échanges de chaleur entre lesdites boucles.

Un tel circuit de climatisation permet une utilisation selon différents modes de fonctionnement mais peine à fournir un mode de fonctionnement dont les performances sont satisfaisantes aussi bien dans un mode de fonctionnement de refroidissement du flux d'air intérieur du véhicule que dans un mode pompe à chaleur afin de réchauffer ledit flux d'air intérieur du véhicule.

Un exemple est divulgué par FR3028016.

Un des buts de la présente invention est donc de remédier au moins partiellement aux inconvénients de l'art antérieur et de proposer un circuit de climatisation amélioré.

La présente invention concerne donc un circuit de climatisation indirect pour véhicule automobile comportant :
- une première boucle de fluide réfrigérant dans laquelle circule un fluide réfrigérant, ladite première boucle de fluide réfrigérant comportant dans le sens de circulation du fluide réfrigérant :
   ∘ un compresseur,
   ∘ un premier dispositif de détente,
   ∘ un premier échangeur de chaleur étant destiné à être traversé par un flux d'air intérieur au véhicule automobile,
   ∘ un deuxième dispositif de détente,
   ∘ un deuxième échangeur de chaleur étant destiné à être traversé par un flux d'air extérieur au véhicule automobile, et
   ∘ une conduite de contournement du deuxième échangeur de chaleur,
- une deuxième boucle de fluide caloporteur dans laquelle circule un fluide caloporteur,
- un échangeur de chaleur bifluide agencé conjointement sur la première boucle de fluide réfrigérant en aval du compresseur, entre ledit compresseur et le premier dispositif de détente, et sur la deuxième boucle de fluide caloporteur, de façon à permettre les échanges de chaleur entre la première boucle de fluide réfrigérant et la deuxième boucle de fluide caloporteur, et
- un premier échangeur de chaleur interne, permettant un échange de chaleur entre le fluide réfrigérant à haute pression en sortie de l'échangeur de chaleur bifluide et le fluide réfrigérant à basse pression en sortie du deuxième échangeur de chaleur ou de la conduite de contournement,
la première boucle de fluide réfrigérant comportant également un deuxième échangeur de chaleur interne permettant un échange de chaleur entre le fluide réfrigérant à haute pression en sortie du premier échangeur de chaleur interne et le fluide réfrigérant à basse pression circulant dans la conduite de contournement.

Selon un aspect de l'invention, le circuit de climatisation inversible indirect comporte un dispositif de redirection du fluide réfrigérant en provenance du premier échangeur de chaleur vers le deuxième échangeur de chaleur ou vers la conduite de contournement.

Selon un autre aspect de l'invention, au moins un des premier ou deuxième échangeurs de chaleur interne peut être un échangeur de chaleur coaxial.

Selon un autre aspect de l'invention, le premier échangeur de chaleur interne coaxial a une longueur comprise entre 50 et 120mm et le deuxième échangeur de chaleur interne coaxial a une longueur comprise entre 200 et 700mm.

Selon un autre aspect de l'invention, le premier dispositif de détente est un détendeur électronique pilotable par une unité de contrôle intégrée au véhicule et le deuxième dispositif de détente est un détendeur thermostatique.

Selon un autre aspect de l'invention, le deuxième dispositif de détente est un détendeur thermostatique intégrant une fonction d'arrêt.

Selon un autre aspect de l'invention, la deuxième boucle de fluide caloporteur comporte :
∘ l'échangeur de chaleur bifluide,
∘ une première conduite de circulation de fluide caloporteur comportant un troisième échangeur de chaleur destiné à être traversé par un flux d'air intérieur au véhicule automobile, et reliant un premier point de jonction disposé en aval de l'échangeur de chaleur bifluide et un deuxième point de jonction disposé en amont dudit échangeur de chaleur bifluide,
∘ une deuxième conduite de circulation de fluide caloporteur comportant un quatrième échangeur de chaleur destiné à être traversé par un flux d'air extérieur au véhicule automobile, et reliant le premier point de jonction disposé en aval de l'échangeur de chaleur bifluide et le deuxième point de jonction disposé en amont dudit échangeur de chaleur bifluide, et
∘ une pompe disposée en aval ou en amont de l'échangeur de chaleur bifluide, entre le premier point de jonction et le deuxième point de jonction.

Selon un autre aspect de l'invention, la première boucle de fluide caloporteur comporte un élément électrique chauffant du fluide caloporteur disposé, dans le sens de circulation du fluide caloporteur, en aval de l'échangeur de chaleur bifluide, entre ledit échangeur de chaleur bifluide et le premier point de jonction.

Selon un autre aspect de l'invention, le circuit de climatisation inversible indirect comporte un dispositif de redirection du fluide caloporteur en provenance de l'échangeur de chaleur bifluide vers la première conduite de circulation et/ou vers la deuxième conduite de circulation.

Selon un autre aspect de l'invention, le circuit de climatisation inversible indirect comporte un volet d'obstruction du flux d'air intérieur traversant le troisième échangeur de chaleur.

La présente invention concerne également un procédé de fonctionnement d'un circuit de climatisation inversible indirect selon un mode de refroidissement dans lequel :
∘ le fluide réfrigérant circule dans le compresseur où ledit fluide réfrigérant passe à haute pression et circule successivement dans l'échangeur de chaleur bifluide, le premier échangeur de chaleur interne, le deuxième échangeur de chaleur interne, et le premier dispositif de détente où ledit fluide réfrigérant passe à basse pression, ledit fluide réfrigérant à basse pression circule ensuite successivement dans le premier échangeur de chaleur, la branche de contournement où il passe dans le deuxième échangeur de chaleur interne, et ensuite dans le premier échangeur de chaleur interne avant de retourner au compresseur,
∘ le fluide caloporteur en sortie de l'échangeur de chaleur bifluide circule dans le quatrième échangeur de chaleur de la deuxième conduite de circulation.

La présente invention concerne également un procédé de fonctionnement d'un circuit de climatisation inversible indirect selon un mode de déshumidification dans lequel :
∘ le fluide réfrigérant circule dans le compresseur où ledit fluide réfrigérant passe à haute pression et circule successivement dans l'échangeur de chaleur bifluide, le premier échangeur de chaleur interne, le deuxième échangeur de chaleur interne, et le premier dispositif de détente où ledit fluide réfrigérant passe à basse pression, ledit fluide réfrigérant à basse pression circule ensuite successivement dans le premier échangeur de chaleur, le deuxième dispositif de détente, le deuxième échangeur de chaleur et ensuite dans le premier échangeur de chaleur interne avant de retourner au compresseur,
∘ une portion du fluide caloporteur en sortie de l'échangeur de chaleur bifluide circule dans le troisième échangeur de chaleur de la première conduite de circulation et une autre portion du fluide caloporteur en sortie de l'échangeur de chaleur bifluide circule dans le quatrième échangeur de chaleur de la deuxième conduite de circulation.

La présente invention concerne également un procédé de fonctionnement d'un circuit de climatisation inversible indirect selon un mode pompe à chaleur dans lequel :
∘ le fluide réfrigérant circule dans le compresseur où ledit fluide réfrigérant passe à haute pression et circule successivement dans l'échangeur de chaleur bifluide, le premier échangeur de chaleur interne, le deuxième échangeur de chaleur interne, et le premier dispositif de détente où ledit fluide réfrigérant passe à une pression intermédiaire, ledit fluide réfrigérant circule ensuite successivement dans le premier échangeur de chaleur, le deuxième dispositif de détente où ledit fluide réfrigérant passe à basse pression, le deuxième échangeur de chaleur et ensuite dans le premier échangeur de chaleur interne avant de retourner au compresseur,
∘ le fluide caloporteur en sortie de l'échangeur de chaleur bifluide circule uniquement dans le troisième échangeur de chaleur de la première conduite de circulation.

La présente invention concerne également un procédé de fonctionnement d'un circuit de climatisation inversible indirect selon un premier mode de dégivrage dans lequel seule la première boucle de fluide réfrigérant est en fonctionnement, le fluide réfrigérant circulant successivement dans le compresseur, l'échangeur de chaleur bifluide, le premier échangeur de chaleur interne, le deuxième échangeur de chaleur interne, le premier dispositif de détente sans subir de perte de pression, le premier échangeur de chaleur, le deuxième dispositif de détente sans subir de perte de pression, le deuxième échangeur de chaleur et ensuite dans le premier échangeur de chaleur interne avant de retourner au compresseur.

La présente invention concerne également un procédé de fonctionnement d'un circuit de climatisation inversible indirect selon un deuxième mode de dégivrage dans lequel seule la deuxième boucle de fluide caloporteur est en fonctionnement, et dans lequel le fluide caloporteur passe successivement dans :
∘ la pompe,
∘ l'échangeur de chaleur, sans échanger d'enthalpie avec le fluide réfrigérant de la première boucle de fluide réfrigérant du fait que cette dernière ne fonctionne pas,
∘ l'élément électrique chauffant qui est en fonctionnement,
et ensuite où :
∘ une portion du fluide caloporteur circulant dans la première conduite de circulation et traversant le troisième échangeur de chaleur et où le volet d'obstruction est refermé,
∘ une autre portion du fluide caloporteur circule dans la deuxième conduite de circulation et traverse le quatrième échangeur de chaleur.

La présente invention concerne également un procédé de fonctionnement d'un circuit de climatisation inversible indirect selon un troisième mode de dégivrage dans lequel seule la deuxième boucle de fluide caloporteur est en fonctionnement, et dans lequel le fluide caloporteur passe successivement dans :
∘ la pompe,
∘ l'échangeur de chaleur, sans échanger d'enthalpie avec le fluide réfrigérant de la première boucle de fluide réfrigérant du fait que cette dernière ne fonctionne pas,
∘ l'élément électrique chauffant qui est en fonctionnement,
   tout le fluide réfrigérant passant ensuite dans la deuxième conduite de circulation et traversant le quatrième échangeur de chaleur.

La présente invention concerne également un procédé de fonctionnement d'un circuit de climatisation inversible indirect selon un mode de chauffage électrique où seule la deuxième boucle de fluide caloporteur est en fonctionnement et dans lequel le fluide caloporteur passe successivement dans :
∘ la pompe,
∘ l'échangeur de chaleur, sans échanger d'enthalpie avec le fluide réfrigérant de la première boucle de fluide réfrigérant du fait que cette dernière ne fonctionne pas,
∘ l'élément électrique chauffant qui est en fonctionnement,
le fluide caloporteur circulant ensuite uniquement dans la première conduite de circulation et traversant le troisième échangeur de chaleur .

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un circuit de climatisation inversible indirect,
- la figure 2 montre une représentation schématique des dispositifs de détente selon un mode de réalisation alternatif,
- la figure 3 montre une représentation schématique de la deuxième boucle de fluide caloporteur du circuit de climatisation inversible indirect de la figure 1, selon un mode de réalisation alternatif,
- la figure 4a montre le circuit de climatisation inversible indirect de la figure 1 selon un mode de refroidissement,
- la figure 4b montre un diagramme pression / enthalpie du mode de refroidissement illustré à la figure 4a,
- la figure 5a montre le circuit de climatisation inversible indirect de la figure 1 selon un mode de déshumidification,
- la figure 5b montre un diagramme pression / enthalpie du mode de déshumidification illustré à la figure 5a,
- la figure 6a montre le circuit de climatisation inversible indirect de la figure 1 selon un mode pompe à chaleur,
- la figure 6b montre un diagramme pression / enthalpie du mode pompe à chaleur illustré à la figure 6a,
- la figure 7 montre la première boucle de fluide réfrigérant de la figure 1 selon un premier mode de dégivrage,
- les figures 8 et 9 montrent les deuxièmes boucles de fluide caloporteur respectivement des figures 1 et 3 selon un deuxième mode de dégivrage,
- la figure 10 montre une représentation schématique de la deuxième boucle de fluide caloporteur du circuit de climatisation inversible indirect de la figure 1, selon un mode de chauffage électrique.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

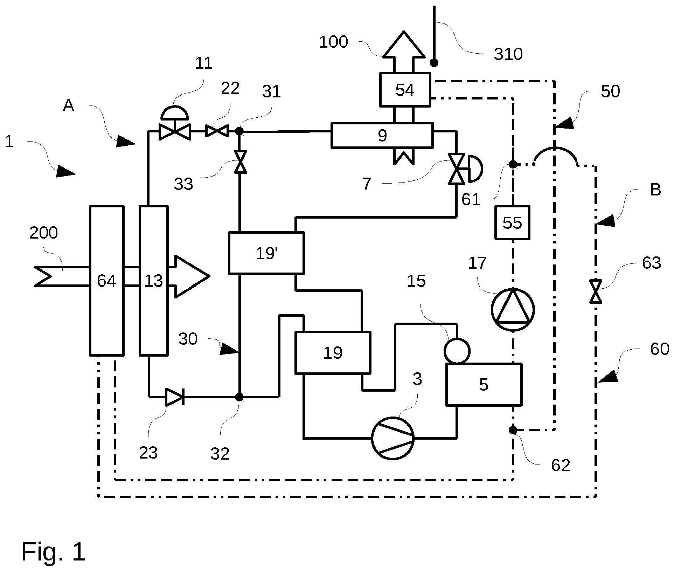

La figure 1 montre un circuit de climatisation indirect 1 pour véhicule automobile. Ce circuit de climatisation indirect 1 comporte notamment :
- une première boucle de fluide réfrigérant A dans laquelle circule un fluide réfrigérant,
- une deuxième boucle de fluide caloporteur B dans laquelle circule un fluide caloporteur, et
- un échangeur de chaleur bifluide 5 agencé conjointement sur la première boucle de fluide réfrigérant A et sur la deuxième boucle de fluide caloporteur B, de façon à permettre les échanges de chaleur entre ladite première boucle de fluide réfrigérant A et ladite deuxième boucle de fluide caloporteur B.

La première boucle de fluide réfrigérant A comporte plus particulièrement dans le sens de circulation du fluide réfrigérant :
∘ un compresseur 3,
∘ l'échangeur de chaleur bifluide 5, disposé en aval dudit compresseur 3,
∘ un premier dispositif de détente 7,
∘ un premier échangeur de chaleur 9 étant destiné à être traversé par un flux d'air intérieur 100 au véhicule automobile,
∘ un deuxième dispositif de détente 11,
∘ un deuxième échangeur de chaleur 13 étant destiné à être traversé par un flux d'air extérieur 200 au véhicule automobile, et
∘ une conduite de contournement 30 du deuxième échangeur de chaleur 13.

La conduite de contournement 30 peut relier plus spécifiquement un premier point de raccordement 31 et un deuxième point de raccordement 32.

Le premier point de raccordement 31 est de préférence disposé, dans le sens de circulation du fluide réfrigérant, en aval du premier échangeur de chaleur 9, entre ledit premier échangeur de chaleur 9 et le deuxième échangeur de chaleur 13. Plus particulièrement, et comme illustré sur la figure 1, le premier point de raccordement 31 est disposé entre le premier échangeur de chaleur 9 et le deuxième dispositif de détente 11. Il est cependant tout à fait possible d'imaginer que le premier point de raccordement 31 soit disposé entre le deuxième dispositif de détente 11 et le deuxième échangeur de chaleur 13 du moment que le fluide réfrigérant a la possibilité de contourner ledit deuxième dispositif de détente 11 ou de le traverser sans subir de perte de pression.

Le deuxième point de raccordement 32 est quant à lui de préférence disposé en aval du deuxième échangeur de chaleur 13, entre ledit échangeur de chaleur 13 et le compresseur 3.

La première boucle de fluide réfrigérant A comporte également un premier échangeur de chaleur interne 19 (IHX pour « internal heat exchanger ») permettant un échange de chaleur entre le fluide réfrigérant à haute pression en sortie de l'échangeur de chaleur bifluide 5 et le fluide réfrigérant à basse pression en sortie du deuxième échangeur de chaleur 13 ou de la conduite de contournement 30. Ce premier IHX 19 comporte notamment une entrée et une sortie de fluide réfrigérant à basse pression en provenance du deuxième point de raccordement 32, ainsi qu'une entrée et une sortie de fluide réfrigérant à haute pression en provenance de l'échangeur de chaleur bifluide 5.

Par fluide réfrigérant à haute pression on entend par là un fluide réfrigérant ayant subi une augmentation de pression au niveau du compresseur 3 et qu'il n'a pas encore subi de perte de pression du fait d'un des premier 7 ou deuxième 11 dispositifs de détente. Par fluide réfrigérant à basse pression n entend par là un fluide réfrigérant ayant subi une perte de pression du fait d'un des premier 7 ou deuxième 11 dispositifs de détente.

La première boucle de fluide réfrigérant A comporte également un deuxième IHX 19' permettant un échange de chaleur entre le fluide réfrigérant à haute pression en sortie du premier IHX 19 et le fluide réfrigérant à basse pression circulant dans la conduite de contournement 30. Ce deuxième IHX 19' comporte notamment une entrée et une sortie de fluide réfrigérant à basse pression en provenance du premier point de raccordement 31, ainsi qu'une entrée et une sortie de fluide réfrigérant à haute pression en provenance du premier IHX 19.

Au moins un des premier 19 ou deuxième 19' IHX peut être un échangeur de chaleur coaxial, c'est à dire comportant deux tubes coaxiaux et entre lesquels s'effectuent les échanges de chaleur.

De préférence, le premier IHX 19 peut être un IHX coaxial d'une longueur comprise entre 50 et 120mm alors que le deuxième IHX 19' peut être un IHX coaxial d'une longueur comprise entre 200 et 700mm.

La première boucle de fluide réfrigérant A peut également comporter une bouteille déshydratante 15 disposée en aval de l'échangeur de chaleur bifluide 5, plus précisément entre ledit échangeur de chaleur bifluide 5 et le premier IHX 19. Une telle bouteille déshydratante disposée sur le côté haute pression du circuit de climatisation, c'est à dire en aval du compresseur 3 et en amont d'un dispositif de détente, a un encombrement moindre ainsi qu'un coût réduit par rapport à d'autres solutions de séparation de phase comme un accumulateur qui serait disposé du côté basse pression du circuit de climatisation, c'est à dire en amont du compresseur 3, notamment en amont du premier IHX 19.

Le circuit de climatisation inversible indirecte 1 comporte également un dispositif de redirection du fluide réfrigérant en provenance du premier échangeur de chaleur 9 vers le deuxième échangeur de chaleur 13 ou vers la conduite de contournement 30.

Ce dispositif de redirection du fluide réfrigérant en provenance du premier échangeur de chaleur 9 peut notamment comporter :
- une première vanne d'arrêt 22 disposée en aval du premier point de raccordement 31, entre ledit premier point de raccordement 31 et le deuxième dispositif de détente 11. Une alternative à cette première vanne d'arrêt 22 peut être que le deuxième dispositif de détente 11 comporte une fonction d'arrêt de sorte à pouvoir bloquer le fluide réfrigérant et l'empêcher de circuler,
- une deuxième vanne d'arrêt 33 disposée sur la conduite de contournement 30, et
- un clapet antiretour 23 disposé en aval du deuxième échangeur de chaleur 13, entre ledit deuxième échangeur de chaleur 13 et le deuxième point de raccordement 32.

Une autre alternative (non représentée) peut également être de disposer une vanne trois-voies au niveau du premier point de raccordement 31.

Par vanne d'arrêt, clapet antiretour, vanne trois-voies ou dispositif de détente avec fonction d'arrêt, on entend ici des éléments mécaniques ou électromécaniques pouvant être pilotés par une unité de commande électronique embarquée dans le véhicule automobile.

Les premier 7 et deuxième 11 dispositifs de détente peuvent être des détendeurs électroniques, c'est à dire dont la pression du fluide réfrigérant en sortie est contrôlée par une électro-vanne dont la position d'ouverture détermine la pression du fluide en sortie. Un tel détendeur électronique est notamment apte à laisser passer le fluide réfrigérant sans perte de pression lorsque ladite électro-vanne est ouverte complètement.

Selon un mode de réalisation préféré, le premier dispositif de détente 7 est un détendeur électronique pilotable par une unité de contrôle intégrée au véhicule et le deuxième dispositif de détente 11 est un détendeur thermostatique.

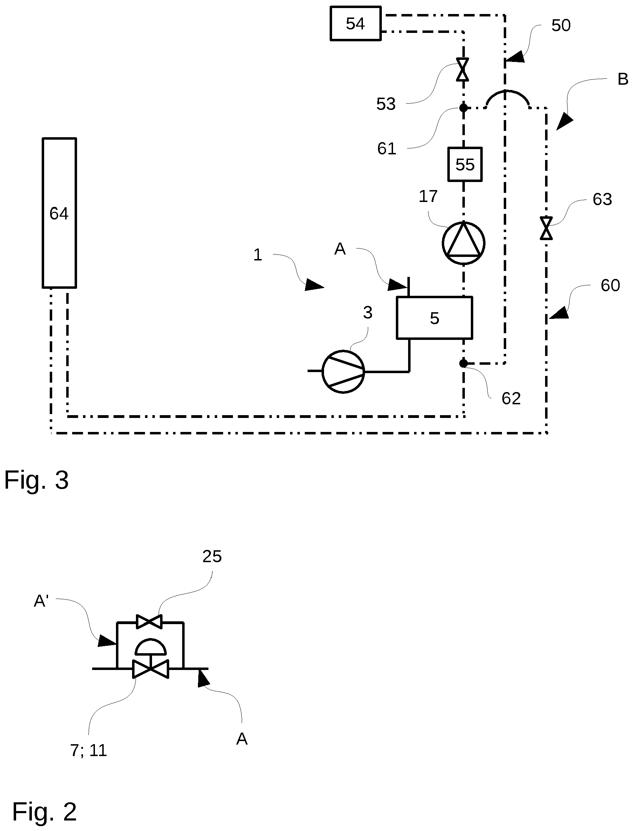

Le deuxième dispositif de détente 11 peut être notamment un détendeur thermostatique intégrant une fonction d'arrêt. Dans ce cas, lesdits premier 7 et deuxième 11 dispositifs de détente peuvent être contournés par une conduite de dérivation A', comportant notamment une vanne d'arrêt 25, comme illustré sur la figure 2. Cette conduite de dérivation A' permet au fluide réfrigérant de contourner lesdits premier 7 et deuxième 11 dispositifs de détente sans qu'il subisse une perte de pression. De préférence, au moins le deuxième dispositif de détente 11 est un détendeur thermostatique comportant une conduite de dérivation A'.

La deuxième boucle de fluide caloporteur B peut comporter quant à elle :
∘ l'échangeur de chaleur bifluide 5,
∘ une première conduite de circulation 50 de fluide caloporteur comportant un troisième échangeur de chaleur 54 destiné à être traversé par un flux d'air intérieur 100 au véhicule automobile, et reliant un premier point de jonction 61 disposé en aval de l'échangeur de chaleur bifluide 5 et un deuxième point de jonction 62 disposé en amont dudit échangeur de chaleur bifluide 5,
∘ une deuxième conduite de circulation 60 de fluide caloporteur comportant un quatrième échangeur de chaleur 64 destiné à être traversé par un flux d'air extérieur 200 au véhicule automobile, et reliant le premier point de jonction 61 disposé en aval de l'échangeur de chaleur bifluide 5 et le deuxième point de jonction 62 disposé en amont dudit échangeur de chaleur bifluide 5, et
∘ une pompe 17 disposée en aval ou en amont de l'échangeur de chaleur bifluide 5, entre le premier point de jonction 61 et le deuxième point de jonction 62.

Le circuit de climatisation inversible indirecte 1 comporte au sein de la deuxième boucle de fluide caloporteur B un dispositif de redirection du fluide caloporteur en provenance de l'échangeur de chaleur bifluide 5 vers la première conduite de circulation 50 et/ou vers la deuxième conduite de circulation 60.

Comme illustré sur les figures 1 et 2, ledit dispositif de redirection du fluide caloporteur en provenance de l'échangeur de chaleur bifluide 5 peut notamment comporter une troisième vanne d'arrêt 63 disposée sur la deuxième conduite de circulation 60 afin de bloquer ou non le fluide caloporteur et de l'empêcher de circuler dans ladite deuxième conduite de circulation 60.

Le circuit de climatisation inversible indirect 1 peut également comporter un volet d'obstruction 310 du flux d'air intérieur 100 traversant le troisième échangeur de chaleur 54.

Ce mode de réalisation permet notamment de limiter le nombre de vannes sur la deuxième boucle de fluide caloporteur B et permet ainsi de limiter les coûts de production.

Selon un mode de réalisation alternatif illustré à la figure 3, le dispositif de redirection du fluide caloporteur en provenance de l'échangeur de chaleur bifluide 5 peut notamment comporter
- une troisième vanne d'arrêt 63 disposée sur la deuxième conduite de circulation 60 afin de bloquer ou non le fluide caloporteur et de l'empêcher de circuler dans ladite deuxième conduite de circulation 60, et
- une quatrième vanne d'arrêt 53 disposée sur la première conduite de circulation 50 afin de bloquer ou non le fluide caloporteur et de l'empêcher de circuler dans ladite première conduite de circulation 50.

La deuxième boucle de fluide caloporteur B peut également comporter un élément électrique chauffant 55 du fluide caloporteur. Ledit élément électrique chauffant 55 est notamment disposé, dans le sens de circulation du fluide caloporteur, en aval de l'échangeur de chaleur bifluide 5, entre ledit échangeur de chaleur bifluide 5 et le premier point de jonction 61.

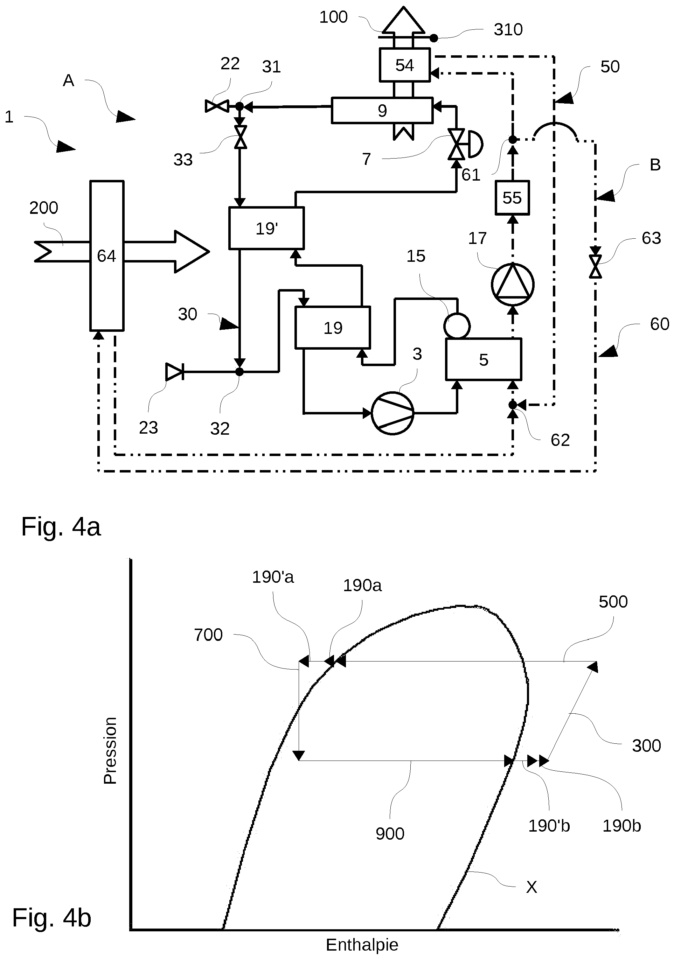

La présente invention concerne également un procédé de fonctionnement du circuit de climatisation inversible indirect 1 selon différents modes de fonctionnement illustrés aux figures 4a à 9. Sur les figures 4a, 5a, 6a, 7, 8 et 9, seuls les éléments dans lesquels le fluide réfrigérant et/ou le fluide caloporteur circulent sont représentés. Le sens de circulation du fluide réfrigérant et/ou du fluide caloporteur est représenté par des flèches.

La figure 4a montre un mode de refroidissement dans lequel :
- le fluide réfrigérant circule dans le compresseur 3 où ledit fluide réfrigérant passe à haute pression et circule successivement dans l'échangeur de chaleur bifluide 5, le premier IHX 19, le deuxième IHX 19', et le premier dispositif de détente 7 où ledit fluide réfrigérant passe à basse pression, ledit fluide réfrigérant à basse pression circule ensuite successivement dans le premier échangeur de chaleur 9, la branche de contournement 30 où il passe dans le deuxième IHX 19', et ensuite dans le premier IHX 19 avant de retourner au compresseur 3,
- le fluide caloporteur en sortie de l'échangeur de chaleur bifluide 5 circule dans le quatrième échangeur de chaleur 64 de la deuxième conduite de circulation 60.

Comme illustré par la figure 4a, une portion du fluide caloporteur en sortie de l'échangeur de chaleur bifluide 5 circule dans le troisième échangeur de chaleur 54 de la première conduite de circulation 50 et une autre portion du fluide caloporteur en sortie de l'échangeur de chaleur bifluide 5 circule dans le quatrième échangeur de chaleur 64 de la deuxième conduite de circulation 50. Le volet d'obstruction 310 est fermé de sorte à empêcher le flux d'air intérieur 100 de circuler dans le troisième échangeur de chaleur 54.

Les variations de pression et d'enthalpie que subit le fluide réfrigérant lors de ce mode de refroidissement, sont illustrées sur le diagramme pression / enthalpie de la figure 4b. La courbe X représente la courbe de saturation du fluide réfrigérant.

Le fluide réfrigérant à l'entrée du compresseur 3 est en phase gazeuse. Le fluide réfrigérant subit une compression, illustrée par la flèche 300, en passant dans le compresseur 3. Ledit fluide réfrigérant est alors dit à haute pression.

Le fluide réfrigérant à haute pression traverse l'échangeur de chaleur bifluide 5 et subit une perte d'enthalpie, illustrée par la flèche 500, du fait du passage en phase liquide du fluide réfrigérant et du transfert d'enthalpie vers le fluide caloporteur de la deuxième boucle de fluide caloporteur B. Le fluide réfrigérant à haute pression perd alors de l'enthalpie tout en restant à une pression constante.

Le fluide réfrigérant à haute pression passe ensuite dans le premier IHX 19 où il perd de l'enthalpie, comme illustré par la flèche 190a. Cette enthalpie est transférée au fluide réfrigérant à basse pression comme illustré par la flèche 190b.

Le fluide réfrigérant à haute pression passe ensuite dans le deuxième IHX 19' où il perd de nouveau de l'enthalpie, comme illustré par la flèche 190'a. Cette enthalpie est transférée au fluide réfrigérant à basse pression comme illustré par la flèche 190'b.

Le fluide réfrigérant à haute pression passe ensuite dans le premier dispositif de détente 7. Le fluide réfrigérant à haute pression subit une perte de pression isenthalpique, illustrée par la flèche 700 et croise la courbe de saturation X, ce qui le fait passer dans un état de mélange liquide plus gaz. Le fluide réfrigérant est maintenant dit à basse pression.

Le fluide réfrigérant à basse pression passe ensuite dans le premier échangeur de chaleur 9 où il gagne de l'enthalpie comme illustré par la flèche 900 en refroidissant le flux d'air intérieur 100. Le fluide réfrigérant à basse pression rejoint ainsi la courbe de saturation X et repasse à l'état gazeux. A la sortie du premier échangeur de chaleur 9, le fluide réfrigérant est redirigé vers la conduite de contournement 30.

Le fluide réfrigérant à basse pression passe ensuite dans le deuxième IHX 19' où il gagne de l'enthalpie, comme illustré par la flèche 190'b issue du fluide réfrigérant à haute pression traversant le deuxième IHX 19'.

Le fluide réfrigérant à basse pression passe ensuite dans le premier IHX 19 où il gagne de nouveau de l'enthalpie, comme illustré par la flèche 190b issue du fluide réfrigérant à haute pression traversant le premier IHX 19. Le fluide réfrigérant à basse pression retourne ensuite vers le compresseur 3.

Ce mode de refroidissement est utile pour refroidir le flux d'air intérieur 100.

Dans ce mode de refroidissement, le dispositif de redirection du fluide réfrigérant est configuré de sorte que le fluide réfrigérant ne circule pas dans le deuxième échangeur de chaleur 13.

Cela est notamment possible en fermant la première vanne d'arrêt 22 et en ouvrant la deuxième vanne d'arrêt 33 afin que le fluide réfrigérant en sortie du premier échangeur de chaleur 9 ne circule pas dans le deuxième échangeur de chaleur 13 et passe dans la conduite de contournement 30.

Le clapet antiretour 23 permet d'éviter que du fluide réfrigérant en sortie de la conduite de contournement 30 ne reflue vers le deuxième échangeur de chaleur 13.

Dans ce mode de refroidissement, les deux IHX 19 et 19' sont actifs et leurs effets s'additionnent. L'utilisation des IHX 19 et 19' l'un après l'autre, permet de diminuer l'enthalpie du fluide réfrigérant en entrée du premier dispositif de détente 7. Le fluide réfrigérant à l'état liquide en sortie de l'échangeur de chaleur bifluide 5 est refroidi par le fluide réfrigérant à l'état gazeux et à basse pression sortant du premier échangeur de chaleur 9. La différence d'enthalpie aux bornes du premier échangeur de chaleur 9 augmente sensiblement ce qui permet à la fois, une augmentation de la puissance frigorifique disponible au niveau dudit premier échangeur de chaleur 9 qui refroidit le flux d'air 100 et cela entraîne donc une amélioration du coefficient de performance (ou COP pour « coefficient of performance »).

De plus, l'ajout d'enthalpie au fluide réfrigérant à basse pression au niveau des premier 19 et deuxième 19' IHX permet de limiter la proportion de fluide réfrigérant en phase liquide avant sont entrée dans le compresseur 3, notamment lorsque le circuit de climatisation 1 comporte une bouteille déshydratante 15 disposée en aval de l'échangeur de chaleur bifluide 5.

Au niveau de la deuxième boucle de fluide caloporteur B, le fluide caloporteur gagne de l'enthalpie issue du fluide réfrigérant au niveau de l'échangeur de chaleur bifluide 5.

Comme illustré sur la figure 4a, une portion du fluide caloporteur circule dans la première conduite de circulation 50 et traverse le troisième échangeur de chaleur 54. Le fluide caloporteur ne perd cependant pas d'enthalpie car le volet d'obstruction 310 est refermé et bloque le flux d'air intérieur 100 de sorte qu'il ne traverse pas le troisième échangeur de chaleur 54.

Une autre portion du fluide caloporteur circule dans la deuxième conduite de circulation 60 et traverse le quatrième échangeur de chaleur 64. Le fluide caloporteur perd de l'enthalpie au niveau dudit échangeur de chaleur 64 en la relâchant dans le flux d'air extérieur 200. La troisième vanne d'arrêt 63 est ouverte pour permettre le passage du fluide caloporteur.

Une solution alternative (non représentée) pour que le fluide caloporteur n'échange pas avec le flux d'air intérieur 100 au niveau du troisième échangeur de chaleur 54, est de munir, comme sur la figure 3, la première conduite de circulation 50 de la quatrième vanne d'arrêt 53 et de la fermer de sorte à empêcher le fluide caloporteur de circuler dans ladite première conduite de circulation 50.

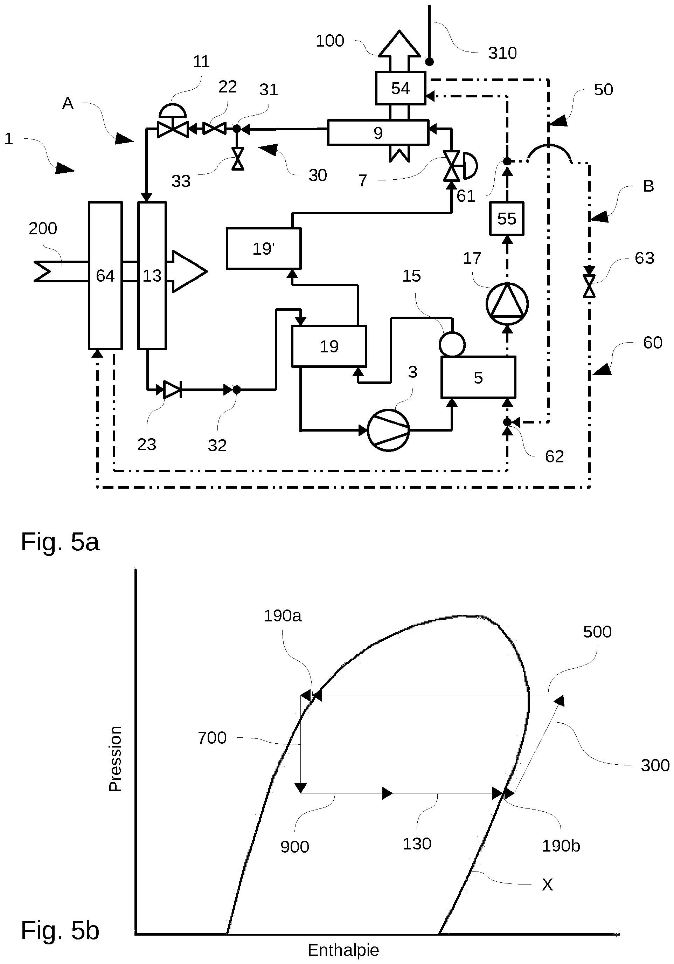

La figure 5a montre un mode de déshumidification dans lequel :
- le fluide réfrigérant circule dans le compresseur 3 où ledit fluide réfrigérant passe à haute pression et circule successivement dans l'échangeur de chaleur bifluide 5, le premier IHX 19, le deuxième IHX 19', et le premier dispositif de détente 7 où ledit fluide réfrigérant passe à basse pression, ledit fluide réfrigérant à basse pression circule ensuite successivement dans le premier échangeur de chaleur 9, le deuxième dispositif de détente 11, le deuxième échangeur de chaleur 13 et ensuite dans le premier IHX 19 avant de retourner au compresseur 3,
- une portion du fluide caloporteur en sortie de l'échangeur de chaleur bifluide 5 circule dans le troisième échangeur de chaleur 54 de la première conduite de circulation 50 et une autre portion du fluide caloporteur en sortie de l'échangeur de chaleur bifluide 5 circule dans le quatrième échangeur de chaleur 64 de la deuxième conduite de circulation 50,
- le volet d'obstruction 310 est ouvert de sorte à permettre au flux d'air intérieur 100 de circuler dans le troisième échangeur de chaleur 54.

Les variations de pression et d'enthalpie que subit le fluide réfrigérant lors de ce mode de déshumidification, sont illustrées sur le diagramme pression / enthalpie de la figure 5b. La courbe X représente la courbe de saturation du fluide réfrigérant.

Le fluide réfrigérant à l'entrée du compresseur 3 est en phase gazeuse. Le fluide réfrigérant subit une compression, illustrée par la flèche 300, en passant dans le compresseur 3. Ledit fluide réfrigérant est alors dit à haute pression.

Le fluide réfrigérant à haute pression traverse l'échangeur de chaleur bifluide 5 et subit une perte d'enthalpie, illustrée par la flèche 500, du fait du passage en phase liquide du fluide réfrigérant et du transfert d'enthalpie vers le fluide caloporteur de la deuxième boucle de fluide caloporteur B. Le fluide réfrigérant à haute pression perd alors de l'enthalpie tout en restant à une pression constante.

Le fluide réfrigérant à haute pression passe ensuite dans le premier IHX 19 où il perd de l'enthalpie, comme illustré par la flèche 190a. Cette enthalpie est transférée au fluide réfrigérant à basse pression comme illustré par la flèche 190b.

Le fluide réfrigérant à haute pression passe ensuite dans le deuxième IHX 19' où il ne perd pas d'enthalpie car il n'y a pas de circulation de fluide réfrigérant à basse pression dans ledit deuxième IHX 19'.

Le fluide réfrigérant à haute pression passe ensuite dans le premier dispositif de détente 7. Le fluide réfrigérant subit une perte de pression isenthalpique, illustrée par la flèche 700 et croise la courbe de saturation X, ce qui le fait passer dans un état de mélange liquide plus gaz. Le fluide réfrigérant est maintenant dit à basse pression.

Le fluide réfrigérant à basse pression traverse ensuite le premier échangeur de chaleur 9 où il gagne de l'enthalpie comme illustré par la flèche 900 en refroidissant le flux d'air intérieur 100.

A la sortie du premier échangeur de chaleur 9, le fluide réfrigérant à basse pression est redirigé vers le deuxième échangeur de chaleur 13. Avant d'arriver au deuxième échangeur de chaleur 13, le fluide réfrigérant à basse pression passe dans le premier dispositif de détente 11 sans subir de perte de pression ou le contourne.

Le fluide réfrigérant à basse pression traverse ensuite le deuxième échangeur de chaleur 13 où il continue de gagner de l'enthalpie, comme illustré par la flèche 130, en absorbant de l'enthalpie du flux d'air extérieur 200. Le fluide réfrigérant rejoint ainsi la courbe de saturation X et repasse à l'état gazeux.

Le fluide réfrigérant à basse pression passe ensuite dans le premier IHX 19 où il gagne de nouveau de l'enthalpie, comme illustré par la flèche 190b, issue du fluide réfrigérant à haute pression traversant le premier IHX 19. Le fluide réfrigérant à basse pression retourne ensuite vers le compresseur 3.

Dans ce mode de déshumidification, le dispositif de redirection du fluide réfrigérant est configuré de sorte que le fluide réfrigérant ne circule pas dans la conduite de contournement 30.

Cela est notamment possible en ouvrant la première vanne d'arrêt 22 et en fermant la deuxième vanne d'arrêt 33 afin que le fluide réfrigérant en sortie du premier échangeur de chaleur 9 ne circule pas dans la conduite de contournement 30 et passe dans le deuxième échangeur de chaleur 13.

Dans ce mode de déshumidification, seul le premier IHX 19 est actif. Du fait que l'enthalpie du fluide réfrigérant à basse pression en entrée du compresseur 3 est plus importante, l'enthalpie du fluide réfrigérant à haute pression en sortie du compresseur 3 sera elle aussi supérieure à l'enthalpie du fluide réfrigérant lorsqu'il n'y a pas d'IHX.

De plus, l'ajout d'enthalpie au fluide réfrigérant à basse pression au niveau du premier IHX permet de limiter la proportion de fluide réfrigérant en phase liquide avant son entrée dans le compresseur 3, notamment lorsque le circuit de climatisation 1 comporte une bouteille déshydratante 15 disposée en aval de l'échangeur de chaleur bifluide 5.

Au niveau de la deuxième boucle de fluide caloporteur B, le fluide caloporteur gagne de l'enthalpie issue du fluide réfrigérant au niveau de l'échangeur de chaleur bifluide 5.

Comme illustré sur la figure 5a, une portion du fluide caloporteur circule dans la première conduite de circulation 50 et traverse le troisième échangeur de chaleur 54. Le fluide caloporteur perd de l'enthalpie en réchauffant le flux d'air intérieur 100. Pour cela, le volet d'obstruction 310 est ouvert ou la quatrième vanne d'arrêt 53 est ouverte.

Une autre portion du fluide caloporteur circule dans la deuxième conduite de circulation 60 et traverse le quatrième échangeur de chaleur 64. Le fluide caloporteur perd de l'enthalpie au niveau dudit échangeur de chaleur 64 en la relâchant dans le flux d'air extérieur 200. La troisième vanne d'arrêt 63 est ouverte pour permettre le passage du fluide caloporteur.

Ce mode de déshumidification est utile pour déshumidifier le flux d'air intérieur 100 en lui faisant subir un refroidissement au niveau du premier échangeur de chaleur 9 et en le réchauffant au niveau du troisième échangeur de chaleur 54.

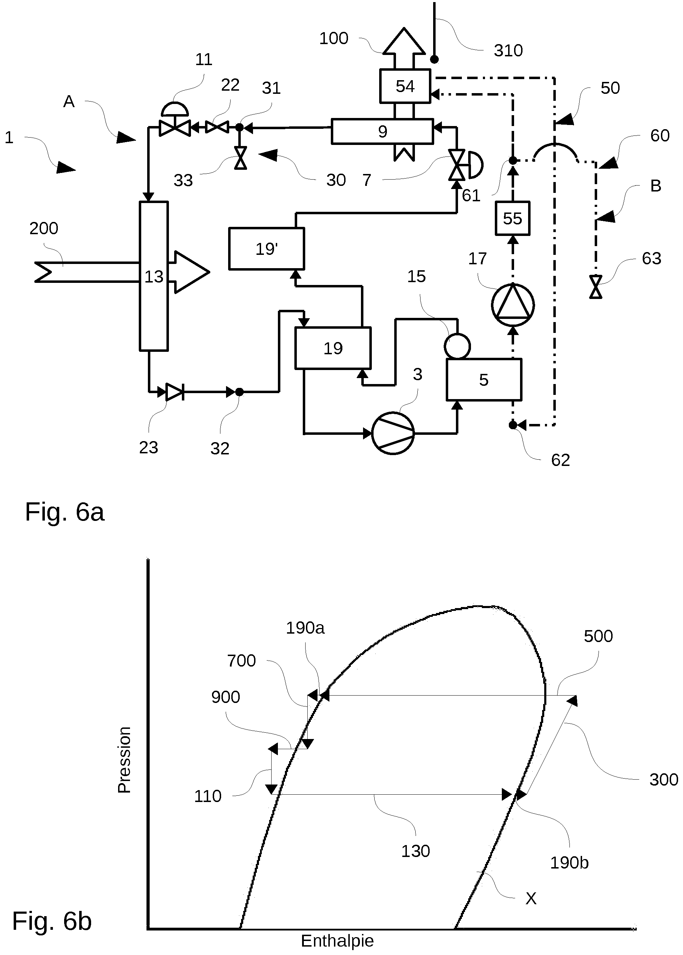

La figure 6a montre un mode pompe à chaleur dans lequel :
- le fluide réfrigérant circule dans le compresseur 3 où ledit fluide réfrigérant passe à haute pression et circule successivement dans l'échangeur de chaleur bifluide 5, le premier IHX 19, le deuxième IHX 19', et le premier dispositif de détente 7 où ledit fluide réfrigérant passe à une pression intermédiaire, ledit fluide réfrigérant à basse pression circule ensuite successivement dans le premier échangeur de chaleur 9, le deuxième dispositif de détente 11 où ledit fluide réfrigérant passe à basse pression, le deuxième échangeur de chaleur 13 et ensuite dans le premier IHX 19 avant de retourner au compresseur 3,
- le fluide caloporteur en sortie de l'échangeur de chaleur bifluide 5 circule uniquement dans le troisième échangeur de chaleur 54 de la première conduite de circulation 50,
- le volet d'obstruction 310 est ouvert de sorte à permettre au flux d'air intérieur 100 de circuler dans le troisième échangeur de chaleur 54.

Par pression intermédiaire, on entend ici un pression située entre la basse pression du fluide réfrigérant lorsqu'il entre dans le compresseur 3 et la haute pression du fluide réfrigérant en sortie dudit compresseur 3.

Les variations de pression et d'enthalpie que subit le fluide réfrigérant lors de ce mode pompe à chaleur, sont illustrées sur le diagramme pression / enthalpie de la figure 6b. La courbe X représente la courbe de saturation du fluide réfrigérant.

Le fluide réfrigérant à l'entrée du compresseur 3 est en phase gazeuse. Le fluide réfrigérant subit une compression, illustrée par la flèche 300, en passant dans le compresseur 3. Ledit fluide réfrigérant est alors dit à haute pression.

Le fluide réfrigérant à haute pression traverse l'échangeur de chaleur bifluide 5 et subit une perte d'enthalpie, illustrée par la flèche 500, du fait du passage en phase liquide du fluide réfrigérant et du transfert d'enthalpie vers le fluide caloporteur de la deuxième boucle de fluide caloporteur B. Le fluide réfrigérant à haute pression perd alors de l'enthalpie tout en restant à une pression constante.

Le fluide réfrigérant à haute pression passe ensuite dans le premier IHX 19 où il perd de l'enthalpie, comme illustré par la flèche 190a. Cette enthalpie est transférée au fluide réfrigérant à basse pression comme illustré par la flèche 190b.

Le fluide réfrigérant à haute pression passe ensuite dans le deuxième IHX 19' où il ne perd pas d'enthalpie car il n'y a pas de circulation de fluide réfrigérant à basse pression dans ledit deuxième IHX 19'.

Le fluide réfrigérant à haute pression passe ensuite dans le premier dispositif de détente 7. Le fluide réfrigérant subit une première perte de pression isenthalpique, illustrée par la flèche 700 et croise la courbe de saturation X, ce qui le fait passer dans un état de mélange liquide plus gaz. Le fluide réfrigérant est maintenant à une pression intermédiaire.

Le fluide réfrigérant traverse ensuite le premier échangeur de chaleur 9 où il perd de l'enthalpie comme illustré par la flèche 900 en rechauffant le flux d'air intérieur 100.

A la sortie du premier échangeur de chaleur 9, le fluide réfrigérant est redirigé vers le deuxième échangeur de chaleur 13. Avant d'arriver au deuxième échangeur de chaleur 13, le fluide réfrigérant passe dans le premier dispositif de détente 11 où il subit une deuxième perte de pression isenthalpique. Le fluide réfrigérant est maintenant à basse pression.

Le fluide réfrigérant à basse pression traverse ensuite le deuxième échangeur de chaleur 13 où il gagne de l'enthalpie, comme illustré par la flèche 130, en absorbant de l'enthalpie du flux d'air extérieur 200. Le fluide réfrigérant rejoint ainsi la courbe de saturation X et repasse à l'état gazeux.

Le fluide réfrigérant à basse pression passe ensuite dans le premier IHX 19 où il gagne de nouveau de l'enthalpie, comme illustré par la flèche 190b, issue du fluide réfrigérant à haute pression traversant le premier IHX 19. Le fluide réfrigérant à basse pression retourne ensuite vers le compresseur 3.

Dans ce mode pompe à chaleur, le dispositif de redirection du fluide réfrigérant est configuré de sorte que le fluide réfrigérant ne circule pas dans la conduite de contournement 30.

Cela est notamment possible en ouvrant la première vanne d'arrêt 22 et en fermant la deuxième vanne d'arrêt 33 afin que le fluide réfrigérant en sortie du premier échangeur de chaleur 9 ne circule pas dans la conduite de contournement 30 et passe dans le deuxième dispositif de détente 11 et le deuxième échangeur de chaleur 13.

Dans ce mode pompe à chaleur, seul le premier IHX 19 est actif. Du fait que l'enthalpie du fluide réfrigérant à basse pression en entrée du compresseur 3 est plus importante, l'enthalpie du fluide réfrigérant à haute pression en sortie du compresseur 3 sera elle aussi supérieure à l'enthalpie du fluide réfrigérant lorsqu'il n'y a pas d'IHX.

De plus, l'ajout d'enthalpie au fluide réfrigérant à basse pression au niveau du premier IHX 19 permet de limiter la proportion de fluide réfrigérant en phase liquide avant sont entrée dans le compresseur 3, notamment lorsque le circuit de climatisation 1 comporte une bouteille déshydratante 15 disposée en aval de l'échangeur de chaleur bifluide 5. L'effet du premier IHX 19 est limité du fait que sa longueur est comprise entre 50 et 120mm. Cette taille permet de limiter les échanges de chaleurs entre le fluide réfrigérant à haute pression et le fluide réfrigérant à basse pression de sorte que l'enthalpie échangée permet de limiter la proportion de fluide réfrigérant en phase liquide avant son entrée dans le compresseur 3 sans pour autant pénaliser l'efficacité du mode pompe à chaleur. En effet, le but de ce mode pompe à chaleur est de relâcher le plus d'enthalpie possible dans le flux d'air intérieur 100 afin de le réchauffer au niveau du premier échangeur de chaleur 9.

Au niveau de la deuxième boucle de fluide caloporteur B, le fluide caloporteur gagne de l'enthalpie issue du fluide réfrigérant au niveau de l'échangeur de chaleur bifluide 5.

Comme illustré sur la figure 6a, le fluide caloporteur circule dans la première conduite de circulation 50 et traverse le troisième échangeur de chaleur 54. Le fluide caloporteur perd de l'enthalpie en réchauffant le flux d'air intérieur 100. Pour cela, le volet d'obstruction 310 est ouvert et/ou la quatrième vanne d'arrêt 53 est ouverte. La troisième vanne d'arrêt 63 est quant à elle fermée pour empêcher le passage du fluide caloporteur dans la deuxième conduite de circulation 60.

Ce mode pompe à chaleur est utile pour réchauffer le flux d'air intérieur 100 à la fois au niveau du premier échangeur de chaleur 9 et du troisième échangeur de chaleur 54 en absorbant de l'enthalpie du flux d'air extérieur 200 au niveau du deuxième échangeur de chaleur 13.

De plus, l'élément électrique chauffant 55 peut être en fonctionnement afin de fournir un apport supplémentaire d'énergie calorifique au fluide caloporteur pour réchauffer le flux d'air intérieur 100.

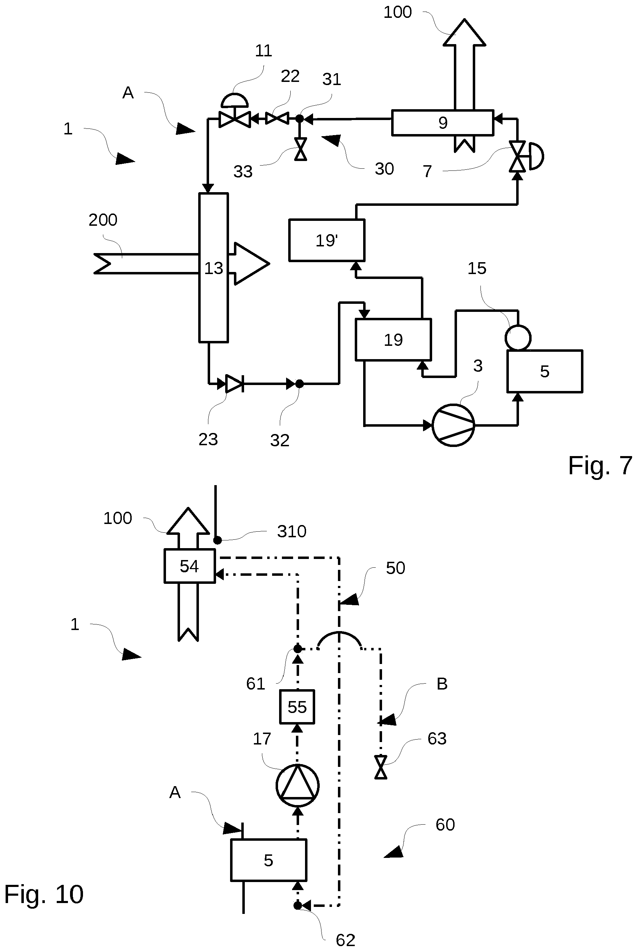

La figure 7 montre un premier mode de dégivrage dans lequel seule la première boucle de fluide réfrigérant A est en fonctionnement.

Dans ce premier mode de dégivrage, le fluide réfrigérant circule dans le compresseur 3 et circule successivement dans l'échangeur de chaleur bifluide 5, le premier IHX 19, le deuxième IHX 19', le premier dispositif de détente 7, le premier échangeur de chaleur 9, le deuxième dispositif de détente 11, le deuxième échangeur de chaleur 13 et ensuite dans le premier IHX 19 avant de retourner au compresseur 3.

Ce premier mode de dégivrage est utile pour apporter du fluide réfrigérant chaud au niveau du deuxième échangeur de chaleur 13 afin d'éviter la formation de givre à son niveau.

Dans ce premier mode de dégivrage, le premier dispositif de détente 7 laisse passer le fluide réfrigérant sans qu'il subisse une perte de pression ou est contourné. Le fluide réfrigérant traverse le premier échangeur de chaleur 9 en ne perdant pas ou peu d'enthalpie, par exemple du fait d'un arrêt du flux d'air intérieur 100.

Le fluide réfrigérant traverse ensuite le deuxième dispositif de détente 11 où il ne subit pas de perte de pression ou le contourne. Le fluide réfrigérant traverse ensuite le deuxième échangeur de chaleur 13 où il libère son enthalpie afin d'éviter la formation de givre.

Dans ce premier mode de dégivrage, le dispositif de redirection du fluide réfrigérant est configuré de sorte que le fluide réfrigérant ne circule pas dans la conduite de contournement 30.

Cela est notamment possible en ouvrant la première vanne d'arrêt 22 et en fermant la deuxième vanne d'arrêt 33 afin que le fluide réfrigérant en sortie du premier échangeur de chaleur 9 ne circule pas dans la conduite de contournement 30 et passe dans le deuxième échangeur de chaleur 13.

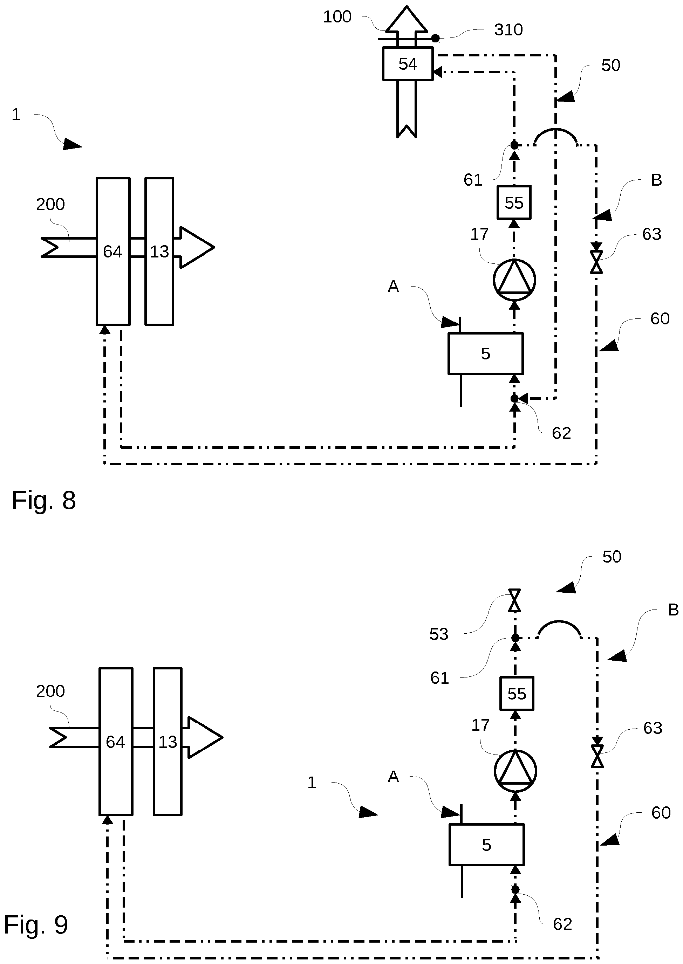

Les figures 8 et 9 montrent un deuxième et un troisième mode de dégivrage où seule la deuxième boucle de fluide caloporteur B est en fonctionnement.

Dans le deuxième mode de dégivrage, illustré à la figure 8, le fluide caloporteur propulsé par la pompe 17 passe par l'échangeur de chaleur 5 mais n'échange pas d'enthalpie avec le fluide réfrigérant de la première boucle de fluide réfrigérant A du fait que cette dernière ne fonctionne pas, par exemple par arrêt du compresseur 3.

Le fluide caloporteur traverse ensuite l'élément électrique chauffant 55 qui est en fonctionnement et réchauffe ledit fluide caloporteur.

Une portion du fluide caloporteur circule dans la première conduite de circulation 50 et traverse le troisième échangeur de chaleur 54. Le fluide caloporteur ne perd cependant pas d'enthalpie car le volet d'obstruction 310 est refermé et bloque le flux d'air intérieur 100 de sorte qu'il ne traverse pas le troisième échangeur de chaleur 54.

Une autre portion du fluide caloporteur circule dans la deuxième conduite de circulation 60 et traverse le quatrième échangeur de chaleur 64. Le fluide caloporteur perd de l'enthalpie au niveau dudit échangeur de chaleur 64 en la relâchant dans le flux d'air extérieur 200 et permet de réchauffer le deuxième échangeur de chaleur 13 afin d'éviter la formation de givre sur ce dernier. La troisième vanne d'arrêt 63 est ouverte pour permettre le passage du fluide caloporteur.

Le troisième mode de dégivrage illustré à la figure 9 est similaire au deuxième mode de dégivrage de la figure 8, à la différence que le fluide caloporteur ne circule pas dans la première conduite de circulation 50 du fait de la présence et de la fermeture de la quatrième vanne d'arrêt 53. Tout le fluide réfrigérant passe donc dans la deuxième conduite de circulation 60 et traverse le quatrième échangeur de chaleur 64.

La figure 10 montre un mode de chauffage électrique où seule la deuxième boucle de fluide caloporteur B est en fonctionnement.

Dans ce deuxième mode de chauffage électrique, le fluide caloporteur propulsé par la pompe 17 passe par l'échangeur de chaleur 5 mais n'échange pas d'enthalpie avec le fluide réfrigérant de la première boucle de fluide réfrigérant A du fait que cette dernière ne fonctionne pas, par exemple par arrêt du compresseur 3.

Le fluide caloporteur traverse ensuite l'élément électrique chauffant 55 qui est en fonctionnement et réchauffe ledit fluide caloporteur.

Le fluide caloporteur circule uniquement dans la première conduite de circulation 50 et traverse le troisième échangeur de chaleur 54. Le fluide caloporteur perd de la chaleur en la transmettant au flux d'air intérieur 100. Pour que le flux d'air intérieur 100 traverse le troisième échangeur de chaleur 54, le volet d'obturation 310 est ouvert et/ou la quatrième vanne d'arrêt 53 est ouverte.

Le fluide caloporteur ne circule pas dans la deuxième conduite de circulation 60 du fait que la troisième vanne d'arrêt 63 est fermée.

Ainsi, on voit bien que de part son architecture et la présence de deux IHX 19 et 19', le circuit de climatisation 1 permet un fonctionnement dans un mode de refroidissement ayant une performance frigorifique et un COP améliorés et dans un mode pompe à chaleur où son efficacité est peu réduite par l'effet d'un IHX.

## Revendications

1. Circuit de climatisation indirect (1) pour véhicule automobile comportant :
• une première boucle de fluide réfrigérant (A) dans laquelle circule un fluide réfrigérant, ladite première boucle de fluide réfrigérant (A) comportant dans le sens de circulation du fluide réfrigérant :
∘ un compresseur (3),
∘ un premier dispositif de détente (7),
∘ un premier échangeur de chaleur (9) étant destiné à être traversé par un flux d'air intérieur (100) au véhicule automobile,
∘ un deuxième dispositif de détente (11),
∘ un deuxième échangeur de chaleur (13) étant destiné à être traversé par un flux d'air extérieur (200) au véhicule automobile, et
∘ une conduite de contournement (30) du deuxième échangeur de chaleur (13),
• une deuxième boucle de fluide caloporteur (B) dans laquelle circule un fluide caloporteur, et
• un échangeur de chaleur bifluide (5) agencé conjointement sur la première boucle de fluide réfrigérant (A) en aval du compresseur (3), entre ledit compresseur (3) et le premier dispositif de détente (7), et sur la deuxième boucle de fluide caloporteur (B), de façon à permettre les échanges de chaleur entre la première boucle de fluide réfrigérant (A) et la deuxième boucle de fluide caloporteur (B),
• un premier échangeur de chaleur interne (19), permettant un échange de chaleur entre le fluide réfrigérant à haute pression en sortie de l'échangeur de chaleur bifluide (5) et le fluide réfrigérant à basse pression en sortie du deuxième échangeur de chaleur (13) ou de la conduite de contournement (30),
**caractérisé en ce que** la première boucle de fluide réfrigérant (A) comporte également un deuxième échangeur de chaleur interne (19') permettant un échange de chaleur entre le fluide réfrigérant à haute pression en sortie du premier échangeur de chaleur interne (19) et le fluide réfrigérant à basse pression circulant dans la conduite de contournement (30).

2. Circuit de climatisation inversible indirect (1) selon la revendication précédente, **caractérisé en ce qu'**il comporte un dispositif de redirection du fluide réfrigérant en provenance du premier échangeur de chaleur (9) vers le deuxième échangeur de chaleur (13) ou vers la conduite de contournement (30).

3. Circuit de climatisation inversible indirect (1) selon l'une des revendications précédentes, **caractérisé en ce qu'**au moins un des premier (19) ou deuxième (19') échangeurs de chaleur interne peut être un échangeur de chaleur coaxial.

4. Circuit de climatisation inversible indirect (1) selon la revendication précédente, **caractérisé en ce que** le premier échangeur de chaleur interne (19) coaxial a une longueur comprise entre 50 et 120mm et le deuxième échangeur de chaleur interne (19') coaxial a une longueur comprise entre 200 et 700mm.

5. Circuit de climatisation inversible indirect (1) selon l'une des revendications précédentes, **caractérisé en ce que** le premier dispositif de détente (7) est un détendeur électronique pilotable par une unité de contrôle intégrée au véhicule et que le deuxième dispositif de détente (11) est un détendeur thermostatique.

6. Circuit de climatisation inversible indirect (1) selon l'une des revendications précédentes, **caractérisé en ce que** le deuxième dispositif de détente (11) est un détendeur thermostatique intégrant une fonction d'arrêt.

7. Circuit de climatisation inversible indirect (1) selon l'une des revendications précédentes, **caractérisé en ce que** la deuxième boucle de fluide caloporteur (B) comporte :
∘ l'échangeur de chaleur bifluide (5),
∘ une première conduite de circulation (50) de fluide caloporteur comportant un troisième échangeur de chaleur (54) destiné à être traversé par un flux d'air intérieur (100) au véhicule automobile, et reliant un premier point de jonction (61) disposé en aval de l'échangeur de chaleur bifluide (5) et un deuxième point de jonction (62) disposé en amont dudit échangeur de chaleur bifluide (5),
∘ une deuxième conduite de circulation (60) de fluide caloporteur comportant un quatrième échangeur de chaleur (64) destiné à être traversé par un flux d'air extérieur (200) au véhicule automobile, et reliant le premier point de jonction (61) disposé en aval de l'échangeur de chaleur bifluide (5) et le deuxième point de jonction (62) disposé en amont dudit échangeur de chaleur bifluide (5), et
∘ une pompe (17) disposée en aval ou en amont de l'échangeur de chaleur bifluide (5), entre le premier point de jonction (61) et le deuxième point de jonction (62).

8. Circuit de climatisation inversible indirect (1) selon la revendication précédente **caractérisé en ce que** la première boucle de fluide caloporteur (B) comporte un élément électrique chauffant (55) du fluide caloporteur disposé, dans le sens de circulation du fluide caloporteur, en aval de l'échangeur de chaleur bifluide (5), entre ledit échangeur de chaleur bifluide (5) et le premier point de jonction (61).

9. Circuit de climatisation inversible indirect (1) selon l'une des revendications 7 ou 8, **caractérisé en ce qu'**il comporte un dispositif de redirection du fluide caloporteur en provenance de l'échangeur de chaleur bifluide (5) vers la première conduite de circulation (50) et/ou vers la deuxième conduite de circulation (60).

10. Circuit de climatisation inversible indirect (1) selon l'une des revendications 7 à 9, **caractérisé en ce qu'**il comporte un volet d'obstruction (310) du flux d'air intérieur (100) traversant le troisième échangeur de chaleur (54).

11. Procédé de fonctionnement d'un circuit de climatisation inversible indirect (1) selon l'une des revendications 7 à 10, selon un mode de refroidissement dans lequel :
∘ le fluide réfrigérant circule dans le compresseur (3) où ledit fluide réfrigérant passe à haute pression et circule successivement dans l'échangeur de chaleur bifluide (5), le premier échangeur de chaleur interne (19), le deuxième échangeur de chaleur interne (19'), et le premier dispositif de détente (7) où ledit fluide réfrigérant passe à basse pression, ledit fluide réfrigérant à basse pression circule ensuite successivement dans le premier échangeur de chaleur (9), la branche de contournement (30) où il passe dans le deuxième échangeur de chaleur interne (19'), et ensuite dans le premier échangeur de chaleur interne (19) avant de retourner au compresseur (3),
∘ le fluide caloporteur en sortie de l'échangeur de chaleur bifluide (5) circule dans le quatrième échangeur de chaleur (64) de la deuxième conduite de circulation (50).

12. Procédé de fonctionnement d'un circuit de climatisation inversible indirect (1) selon l'une des revendications 7 à 10, selon un mode de déshumidification dans lequel :
∘ le fluide réfrigérant circule dans le compresseur (3) où ledit fluide réfrigérant passe à haute pression et circule successivement dans l'échangeur de chaleur bifluide (5), le premier échangeur de chaleur interne (19), le deuxième échangeur de chaleur interne (19'), et le premier dispositif de détente (7) où ledit fluide réfrigérant passe à basse pression, ledit fluide réfrigérant à basse pression circule ensuite successivement dans le premier échangeur de chaleur (9), le deuxième dispositif de détente (11), le deuxième échangeur de chaleur (13) et ensuite dans le premier échangeur de chaleur interne (19) avant de retourner au compresseur (3),
∘ une portion du fluide caloporteur en sortie de l'échangeur de chaleur bifluide (5) circule dans le troisième échangeur de chaleur (54) de la première conduite de circulation (50) et une autre portion du fluide caloporteur en sortie de l'échangeur de chaleur bifluide (5) circule dans le quatrième échangeur de chaleur (64) de la deuxième conduite de circulation (50).

13. Procédé de fonctionnement d'un circuit de climatisation inversible indirect (1) selon l'une des revendications 7 à 10, selon un mode pompe à chaleur dans lequel :
∘ le fluide réfrigérant circule dans le compresseur (3) où ledit fluide réfrigérant passe à haute pression et circule successivement dans l'échangeur de chaleur bifluide (5), le premier échangeur de chaleur interne (19), le deuxième échangeur de chaleur interne (19'), et le premier dispositif de détente (7) où ledit fluide réfrigérant passe à une pression intermédiaire, ledit fluide réfrigérant circule ensuite successivement dans le premier échangeur de chaleur (9), le deuxième dispositif de détente (11) où ledit fluide réfrigérant passe à basse pression, le deuxième échangeur de chaleur (13) et ensuite dans le premier échangeur de chaleur interne (19) avant de retourner au compresseur (3),
∘ le fluide caloporteur en sortie de l'échangeur de chaleur bifluide (5) circule uniquement dans le troisième échangeur de chaleur (54) de la première conduite de circulation (50).

14. Procédé de fonctionnement d'un circuit de climatisation inversible indirect (1) selon l'une des revendications 1 à 10, selon un premier mode de dégivrage dans lequel seule la première boucle de fluide réfrigérant (A) est en fonctionnement, le fluide réfrigérant circulant successivement dans le compresseur (3), l'échangeur de chaleur bifluide (5), le premier échangeur de chaleur interne (19), le deuxième échangeur de chaleur interne (19'), le premier dispositif de détente (7) sans subir de perte de pression, le premier échangeur de chaleur (9), le deuxième dispositif de détente (11) sans subir de perte de pression, le deuxième échangeur de chaleur (13) et ensuite dans le premier échangeur de chaleur interne (19) avant de retourner au compresseur (3).

15. Procédé de fonctionnement d'un circuit de climatisation inversible indirect (1) selon la revendication 10, selon un deuxième mode de dégivrage dans lequel seule la deuxième boucle de fluide caloporteur (B) est en fonctionnement, et dans lequel le fluide caloporteur passe successivement dans :
∘ la pompe (17),
∘ l'échangeur de chaleur (5), sans échanger d'enthalpie avec le fluide réfrigérant de la première boucle de fluide réfrigérant (A) du fait que cette dernière ne fonctionne pas,
∘ l'élément électrique chauffant (55) qui est en fonctionnement,
et ensuite où :
∘ une portion du fluide caloporteur circulant dans la première conduite de circulation (50) et traversant le troisième échangeur de chaleur (54) et où le volet d'obstruction (310) est refermé,
∘ une autre portion du fluide caloporteur circule dans la deuxième conduite de circulation (60) et traverse le quatrième échangeur de chaleur (64).

16. Procédé de fonctionnement d'un circuit de climatisation inversible indirect (1) selon l'une des revendications 7 à 10, selon un troisième mode de dégivrage dans lequel seule la deuxième boucle de fluide caloporteur (B) est en fonctionnement, et dans lequel le fluide caloporteur passe successivement dans :
∘ la pompe (17),
∘ l'échangeur de chaleur (5), sans échanger d'enthalpie avec le fluide réfrigérant de la première boucle de fluide réfrigérant (A) du fait que cette dernière ne fonctionne pas,
∘ l'élément électrique chauffant (55) qui est en fonctionnement,
tout le fluide réfrigérant passant ensuite dans la deuxième conduite de circulation (60) et traversant le quatrième échangeur de chaleur (64).

17. Procédé de fonctionnement d'un circuit de climatisation inversible indirect (1) selon l'une des revendications 7 à 10, selon un mode de chauffage électrique où seule la deuxième boucle de fluide caloporteur (B) est en fonctionnement et dans lequel le fluide caloporteur passe successivement dans :
∘ la pompe (17),
∘ l'échangeur de chaleur (5), sans échanger d'enthalpie avec le fluide réfrigérant de la première boucle de fluide réfrigérant (A) du fait que cette dernière ne fonctionne pas,
∘ l'élément électrique chauffant (55) qui est en fonctionnement,
le fluide caloporteur circulant ensuite uniquement dans la première conduite de circulation (50) et traversant le troisième échangeur de chaleur (54).

## Patentansprüche

1. Indirekter Klimakreislauf (1) für ein Kraftfahrzeug, welcher umfasst:
• einen ersten Kältemittelkreislauf (A), in welchem ein Kältemittel zirkuliert, wobei der erste Kältemittelkreislauf (A) in der Strömungsrichtung des Kältemittels umfasst:
∘ einen Kompressor (3),
∘ eine erste Expansionsvorrichtung (7),
∘ einen ersten Wärmetauscher (9), der dazu bestimmt ist, von einem in Bezug auf das Kraftfahrzeug inneren Luftstrom (100) durchströmt zu werden,
∘ eine zweite Expansionsvorrichtung (11),
∘ einen zweiten Wärmetauscher (13), der dazu bestimmt ist, von einem in Bezug auf das Kraftfahrzeug äußeren Luftstrom (200) durchströmt zu werden, und
∘ eine Umgehungsleitung (30) des zweiten Wärmetauschers (13),
• einen zweiten Wärmeträgerfluidkreislauf (B), in welchem ein Wärmeträgerfluid zirkuliert, und
• einen Zwei-Fluid-Wärmetauscher (5), der sowohl im ersten Kältemittelkreislauf (A) stromabwärts des Kompressors (3), zwischen dem Kompressor (3) und der ersten Expansionsvorrichtung (7), als auch im zweiten Wärmeträgerfluidkreislauf (B) angeordnet ist, um die Wärmeaustauschvorgänge zwischen dem ersten Kältemittelkreislauf (A) und dem zweiten Wärmeträgerfluidkreislauf (B) zu ermöglichen,
• einen ersten inneren Wärmetauscher (19), der einen Wärmeaustausch zwischen dem unter hohem Druck stehenden Kältemittel am Auslass des Zwei-Fluid-Wärmetauschers (5) und dem unter niedrigem Druck stehenden Kältemittel am Auslass des zweiten Wärmetauschers (13) oder der Umgehungsleitung (30) zu ermöglichen,
**dadurch gekennzeichnet, dass** der erste Kältemittelkreislauf (A) außerdem einen zweiten inneren Wärmetauscher (19') umfasst, der einen Wärmeaustausch zwischen dem unter hohem Druck stehenden Kältemittel am Auslass des ersten inneren Wärmetauschers (19) und dem unter niedrigem Druck stehenden Kältemittel, das in der Umgehungsleitung (30) zirkuliert, zu ermöglichen.

2. Indirekter reversibler Klimakreislauf (1) nach dem vorhergehenden Anspruch, **dadurch gekennzeichnet, dass** er eine Vorrichtung zur Umleitung des vom ersten Wärmetauscher (9) kommenden Kältemittels zum zweiten Wärmetauscher (13) oder zu der Umgehungsleitung (30) umfasst.

3. Indirekter reversibler Klimakreislauf (1) nach einem der vorhergehenden Ansprüche, **dadurch gekennzeichnet, dass** der erste (19) und/oder der zweite (19') innere Wärmetauscher ein koaxialer Wärmetauscher sein können.

4. Indirekter reversibler Klimakreislauf (1) nach dem vorhergehenden Anspruch, **dadurch gekennzeichnet, dass** der erste koaxiale innere Wärmetauscher (19) eine Länge zwischen 50 und 120 mm aufweist und der zweite koaxiale innere Wärmetauscher (19') eine Länge zwischen 200 und 700 mm aufweist.

5. Indirekter reversibler Klimakreislauf (1) nach einem der vorhergehenden Ansprüche, **dadurch gekennzeichnet, dass** die erste Expansionsvorrichtung (7) ein elektronisches Expansionsventil ist, das von einer in das Fahrzeug integrierten Steuereinheit steuerbar ist, und dass die zweite Expansionsvorrichtung (11) ein thermostatisches Expansionsventil ist.

6. Indirekter reversibler Klimakreislauf (1) nach einem der vorhergehenden Ansprüche, **dadurch gekennzeichnet, dass** die zweite Expansionsvorrichtung (11) ein thermostatisches Expansionsventil ist, in das eine Stopp-Funktion integriert ist.

7. Indirekter reversibler Klimakreislauf (1) nach einem der vorhergehenden Ansprüche, **dadurch gekennzeichnet, dass** der zweite Wärmeträgerfluidkreislauf (B) umfasst:
∘ den Zwei-Fluid-Wärmetauscher (5),
∘ eine erste Wärmeträgerfluid-Zirkulationsleitung (50), die einen dritten Wärmetauscher (54) umfasst, der dazu bestimmt ist, von einem in Bezug auf das Kraftfahrzeug inneren Luftstrom (100) durchströmt zu werden, und die einen ersten Verbindungspunkt (61), der stromabwärts des Zwei-Fluid-Wärmetauschers (5) angeordnet ist, und einen zweiten Verbindungspunkt (62), der stromaufwärts des Zwei-Fluid-Wärmetauschers (5) angeordnet ist, verbindet,
∘ eine zweite Wärmeträgerfluid-Zirkulationsleitung (60), die einen vierten Wärmetauscher (64) umfasst, der dazu bestimmt ist, von einem in Bezug auf das Kraftfahrzeug äußeren Luftstrom (200) durchströmt zu werden, und die den ersten Verbindungspunkt (61), der stromabwärts des Zwei-Fluid-Wärmetauschers (5) angeordnet ist, und den zweiten Verbindungspunkt (62), der stromaufwärts des Zwei-Fluid-Wärmetauschers (5) angeordnet ist, verbindet, und
∘ eine Pumpe (17), die stromabwärts oder stromaufwärts des Zwei-Fluid-Wärmetauschers (5) zwischen dem ersten Verbindungspunkt (61) und dem zweiten Verbindungspunkt (62) angeordnet ist.

8. Indirekter reversibler Klimakreislauf (1) nach dem vorhergehenden Anspruch, **dadurch gekennzeichnet, dass** der erste Wärmeträgerfluidkreislauf (B) ein elektrisches Heizelement (55) für das Wärmeträgerfluid umfasst, das in der Strömungsrichtung des Wärmeträgerfluids stromabwärts des Zwei-Fluid-Wärmetauschers (5) zwischen dem Zwei-Fluid-Wärmetauscher (5) und dem ersten Verbindungspunkt (61) angeordnet ist.

9. Indirekter reversibler Klimakreislauf (1) nach einem der Ansprüche 7 oder 8, **dadurch gekennzeichnet, dass** er eine Vorrichtung zur Umleitung des von dem Zwei-Fluid-Wärmetauscher (5) kommenden Wärmeträgerfluids zur ersten Zirkulationsleitung (50) und/oder zur zweiten Zirkulationsleitung (60) umfasst.

10. Indirekter reversibler Klimakreislauf (1) nach einem der Ansprüche 7 bis 9, **dadurch gekennzeichnet, dass** er eine Absperrklappe (310) für den inneren Luftstrom (100) umfasst, der den dritten Wärmetauscher (54) durchströmt.

11. Verfahren zum Betrieb eines indirekten reversiblen Klimakreislaufs (1) nach einem der Ansprüche 7 bis 10 in einer Kühlungsbetriebsart, wobei:
∘ das Kältemittel in den Kompressor (3) strömt, wo das Kältemittel zu hohem Druck übergeht und nacheinander in den Zwei-Fluid-Wärmetauscher (5), den ersten inneren Wärmetauscher (19), den zweiten inneren Wärmetauscher (19') und die erste Expansionsvorrichtung (7), wo das Kältemittel zu niedrigem Druck übergeht, strömt, und das Kältemittel mit niedrigem Druck anschließend nacheinander in den ersten Wärmetauscher (9), die Umgehungsleitung (30), wo es in den zweiten inneren Wärmetauscher (19') gelangt, und anschließend in den ersten inneren Wärmetauscher (19) strömt, bevor es zum Kompressor (3) zurückströmt,
∘ das Wärmeträgerfluid am Auslass des Zwei-Fluid-Wärmetauschers (5) in den vierten Wärmetauscher (64) der zweiten Zirkulationsleitung (50) strömt.

12. Verfahren zum Betrieb eines indirekten reversiblen Klimakreislaufs (1) nach einem der Ansprüche 7 bis 10 in einer Entfeuchtungsbetriebsart, wobei:
∘ das Kältemittel in den Kompressor (3) strömt, wo das Kältemittel zu hohem Druck übergeht und nacheinander in den Zwei-Fluid-Wärmetauscher (5), den ersten inneren Wärmetauscher (19), den zweiten inneren Wärmetauscher (19') und die erste Expansionsvorrichtung (7), wo das Kältemittel zu niedrigem Druck übergeht, strömt, und das Kältemittel mit niedrigem Druck anschließend nacheinander in den ersten Wärmetauscher (9), die zweite Expansionsvorrichtung (11), den zweiten Wärmetauscher (13) und anschließend in den ersten inneren Wärmetauscher (19) strömt, bevor es zum Kompressor (3) zurückströmt,
∘ ein Teil des Wärmeträgerfluids am Auslass des Zwei-Fluid-Wärmetauschers (5) in den dritten Wärmetauscher (54) der ersten Zirkulationsleitung (50) strömt und ein anderer Teil des Wärmeträgerfluids am Auslass des Zwei-Fluid-Wärmetauschers (5) in den vierten Wärmetauscher (64) der zweiten Zirkulationsleitung (50) strömt.

13. Verfahren zum Betrieb eines indirekten reversiblen Klimakreislaufs (1) nach einem der Ansprüche 7 bis 10 in einer Wärmepumpenbetriebsart, wobei:
∘ das Kältemittel in den Kompressor (3) strömt, wo das Kältemittel zu hohem Druck übergeht und nacheinander in den Zwei-Fluid-Wärmetauscher (5), den ersten inneren Wärmetauscher (19), den zweiten inneren Wärmetauscher (19') und die erste Expansionsvorrichtung (7), wo das Kältemittel zu einem Zwischendruck übergeht, strömt, und das Kältemittel anschließend nacheinander in den ersten Wärmetauscher (9), die zweite Expansionsvorrichtung (11), wo das Kältemittel zu niedrigem Druck übergeht, den zweiten Wärmetauscher (13) und anschließend in den ersten inneren Wärmetauscher (19) strömt, bevor es zum Kompressor (3) zurückströmt,
∘ das Wärmeträgerfluid am Auslass des Zwei-Fluid-Wärmetauschers (5) ausschließlich in den dritten Wärmetauscher (54) der ersten Zirkulationsleitung (50) strömt.

14. Verfahren zum Betrieb eines indirekten reversiblen Klimakreislaufs (1) nach einem der Ansprüche 1 bis 10 in einer ersten Entfrostungsbetriebsart, in welcher nur der erste Kältemittelkreislauf (A) in Betrieb ist, wobei das Kältemittel nacheinander in den Kompressor (3), den Zwei-Fluid-Wärmetauscher (5), den ersten inneren Wärmetauscher (19), den zweiten inneren Wärmetauscher (19'), die erste Expansionsvorrichtung (7), ohne einen Druckverlust zu erfahren, den ersten Wärmetauscher (9), die zweite Expansionsvorrichtung (11), ohne einen Druckverlust zu erfahren, den zweiten Wärmetauscher (13) und anschließend in den ersten inneren Wärmetauscher (19) strömt, bevor es zum Kompressor (3) zurückströmt.

15. Verfahren zum Betrieb eines indirekten reversiblen Klimakreislaufs (1) nach Anspruch 10 in einer zweiten Entfrostungsbetriebsart, in welcher nur der zweite Wärmeträgerfluidkreislauf (B) in Betrieb ist und in welcher das Wärmeträgerfluid nacheinander durchströmt:
∘ die Pumpe (17),
∘ den Wärmetauscher (5), ohne Enthalpie mit dem Kältemittel des ersten Kältemittelkreislaufs (A) auszutauschen, da dieser Letztere nicht in Betrieb ist,
∘ das elektrische Heizelement (55), das in Betrieb ist,
und wobei anschließend:
∘ ein Teil des Wärmeträgerfluids in der ersten Zirkulationsleitung (50) zirkuliert und den dritten Wärmetauscher (54) durchströmt, und wobei die Absperrklappe (310) wieder geschlossen wird,
∘ ein weiterer Teil des Wärmeträgerfluids in der zweiten Zirkulationsleitung (60) zirkuliert und den vierten Wärmetauscher (64) durchströmt.

16. Verfahren zum Betrieb eines indirekten reversiblen Klimakreislaufs (1) nach einem der Ansprüche 7 bis 10 in einer dritten Entfrostungsbetriebsart, in welcher nur der zweite Wärmeträgerfluidkreislauf (B) in Betrieb ist und in welcher das Wärmeträgerfluid nacheinander durchströmt:
∘ die Pumpe (17),
∘ den Wärmetauscher (5), ohne Enthalpie mit dem Kältemittel des ersten Kältemittelkreislaufs (A) auszutauschen, da dieser Letztere nicht in Betrieb ist,
∘ das elektrische Heizelement (55), das in Betrieb ist,
wobei das gesamte Kältemittel anschließend in die zweite Zirkulationsleitung (60) strömt und den vierten Wärmetauscher (64) durchströmt.

17. Verfahren zum Betrieb eines indirekten reversiblen Klimakreislaufs (1) nach einem der Ansprüche 7 bis 10 in einer Betriebsart der elektrischen Heizung, welcher nur der zweite Wärmeträgerfluidkreislauf (B) in Betrieb ist und in welcher das Wärmeträgerfluid nacheinander durchströmt:
∘ die Pumpe (17),
∘ den Wärmetauscher (5), ohne Enthalpie mit dem Kältemittel des ersten Kältemittelkreislaufs (A) auszutauschen, da dieser Letztere nicht in Betrieb ist,
∘ das elektrische Heizelement (55), das in Betrieb ist,
wobei das Wärmeträgerfluid anschließend ausschließlich in der ersten Zirkulationsleitung (50) zirkuliert und den dritten Wärmetauscher (54) durchströmt.

## Claims

1. Indirect air conditioning circuit (1) for a motor vehicle, comprising:
• a first refrigerant-fluid loop (A) in which a refrigerant fluid circulates, the said first refrigerant-fluid loop (A) comprising, in the direction in which the refrigerant fluid circulates:
∘ a compressor (3),
∘ a first expansion device (7),
∘ a first heat exchanger (9) intended to have passing through it a flow (100) of air internal to the motor vehicle,
∘ a second expansion device (11),
∘ a second heat exchanger (13) intended to have passing through it a flow (200) of air external to the motor vehicle, and
∘ a bypass pipe (30) bypassing the second heat exchanger (13),
• a second heat-transfer-fluid loop (B) in which a heat-transfer fluid circulates, and
• a two-fluid heat exchanger (5) arranged jointly on the first refrigerant-fluid loop (A) downstream of the compressor (3), between the said compressor (3) and the first expansion device (7), and on the second heat-transfer-fluid loop (B), so as to allow exchanges of heat between the first refrigerant-fluid loop (A) and the second heat-transfer-fluid loop (B),
• a first internal heat exchanger (19), allowing an exchange of heat between the high-pressure refrigerant fluid leaving the two-fluid heat exchanger (5) and the low-pressure refrigerant fluid leaving the second heat exchanger (13) or leaving the bypass pipe (30),
**characterized in that** the first refrigerant-fluid loop (A) also comprises a second internal heat exchanger (19') allowing an exchange of heat between the high-pressure refrigerant fluid leaving the first internal heat exchanger (19) and the low-pressure refrigerant fluid circulating in the bypass pipe (30).

2. Indirect reversible air conditioning circuit (1) according to the preceding claim, **characterized in that** it comprises a device for redirecting the refrigerant fluid coming from the first heat exchanger (9) towards the second heat exchanger (13) or towards the bypass pipe (30).

3. Indirect reversible air conditioning circuit (1) according to either one of the preceding claims, **characterized in that** of the first (19) and second (19') internal heat exchangers at least one may be a coaxial heat exchanger.

4. Indirect reversible air conditioning circuit (1) according to the preceding claim, **characterized in that** the coaxial first internal heat exchanger (18) has a length comprised between 50 and 120 mm and the coaxial second internal heat exchanger (19') has a length comprised between 200 and 700 mm.

5. Indirect reversible air conditioning circuit (1) according to one of the preceding claims, **characterized in that** the first expansion device (7) is an electronic expansion valve that can be controlled by a control unit incorporated into the vehicle and **in that** the second expansion device (11) is a thermostatic expansion valve.

6. Indirect reversible air conditioning circuit (1) according to one of the preceding claims, **characterized in that** the second expansion device (11) is a thermostatic expansion valve incorporating a shutoff function.

7. Indirect reversible air conditioning circuit (1) according to one of the preceding claims, **characterized in that** the second heat-transfer-fluid loop (B) comprises:
∘ the two-fluid heat exchanger (5),
∘ a first circulation pipe (50) for heat-transfer fluid, comprising a third heat exchanger (54) intended to have passing through it a flow (100) of air internal to the motor vehicle, and connecting a first junction (61) positioned downstream of the two-fluid heat exchanger (5) and a second junction (62) positioned upstream of the said two-fluid heat exchanger (5),
∘ a second flow pipe (60) for heat-transfer fluid, comprising a fourth heat exchanger (64) intended to have passing through it a flow (200) of air external to the motor vehicle, and connecting the first junction (61) positioned downstream of the two-fluid heat exchanger (5) and the second junction (62) positioned upstream of the said two-fluid heat exchanger (5), and
∘ a pump (17) positioned downstream or upstream of the two-fluid heat exchanger (5), between the first junction (61) and the second junction (62) .

8. Indirect reversible air conditioning circuit (1) according to the preceding claim, **characterized in that** the first heat-transfer-fluid loop (B) comprises an electric heating element (55) for heating the heat-transfer fluid, positioned, in the direction in which the heat-transfer fluid circulates, downstream of the two-fluid heat exchanger (5), between the said two-fluid heat exchanger (5) and the first junction (61).

9. Indirect reversible air conditioning circuit (1) according to one of Claims 7 and 8, **characterized in that** it comprises a device for redirecting the heat-transfer fluid coming from the two-fluid heat exchanger (5) towards the first circulation pipe (50) and/or towards the second circulation pipe (60).

10. Indirect reversible air conditioning circuit (1) according to one of Claims 7 to 9, **characterized in that** it comprises a shut-off flap (310) obstructing the flow (100) of interior air passing through the third heat exchanger (54).

11. Method for operating an indirect reversible air conditioning circuit (1) according to one of Claims 7 to 10, in a cooling mode in which:
∘ the refrigerant fluid circulates through the compressor (3) where the said refrigerant fluid transitions to a high pressure and circulates in succession through the two-fluid heat exchanger (5), the first internal heat exchanger (19), the second internal heat exchanger (19') and the first expansion device (7) where the said refrigerant fluid transitions to a low temperature, the said low-pressure refrigerant fluid then circulates in succession through the first heat exchanger (9), the bypass leg (30) where it enters the second internal heat exchanger (19') and then the first internal heat exchanger (19) before returning to the compressor (3),
∘ the heat-transfer fluid leaving the two-fluid heat exchanger (5) circulates through the fourth heat exchanger (64) of the second circulation pipe (50).

12. Method for operating an indirect reversible air conditioning circuit (1) according to one of Claims 7 to 10, in a dehumidifying mode in which:
∘ the refrigerant fluid circulates through the compressor (3) where the said refrigerant fluid transitions to a high pressure and circulates in succession through the two-fluid heat exchanger (5), the first internal heat exchanger (19), the second internal heat exchanger (19') and the first expansion device (7) where the said refrigerant fluid transitions to a low pressure, the said low-pressure refrigerant fluid then circulates in succession through the first heat exchanger (9), the second expansion device (11), the second heat exchanger (13) and then the first internal heat exchanger (19) before returning to the compressor (3),
∘ a portion of the heat-transfer fluid leaving the two-fluid heat exchanger (5) circulates through the third heat exchanger (54) of the first circulation pipe (50), and another portion of the heat-transfer fluid leaving the two-fluid heat exchanger (5) circulates through the fourth heat exchanger (64) of the second circulation pipe (50).

13. Method of operating an indirect reversible air conditioning circuit (1) according to one of claims 7 to 10, in a heat pump mode in which:
∘ the refrigerant fluid circulates through the compressor (3) where the said refrigerant fluid transitions to a high pressure and circulates in succession through the two-fluid heat exchanger (5), the first internal heat exchanger (19), the second internal heat exchanger (19') and the first expansion device (7) where the said refrigerant fluid transitions to an intermediate pressure, the said refrigerant fluid then circulates in succession through the first heat exchanger (9), the second expansion device (11) where the said refrigerant fluid transitions to a low pressure, the second heat exchanger (13) and then through the first internal heat exchanger (19) before returning to the compressor (3),
∘ the heat-transfer fluid leaving the two-fluid heat exchanger (5) circulates only through the third heat exchanger (54) of the first circulation pipe (50).

14. Method of operating an indirect reversible air conditioning circuit (1) according to one of Claims 1 to 10, in a first de-icing mode in which only the first refrigerant-fluid loop (A) is in operation, the refrigerant fluid circulating in succession through the compressor (3), the two-fluid heat exchanger (5), the first internal heat exchanger (19), the second internal heat exchanger (19'), the first expansion device (7) without experiencing any loss of pressure, the first heat exchanger (9), the second expansion device (11) without experiencing any loss of pressure, the second heat exchanger (13) and then through the first internal heat exchanger (19), before returning to the compressor (3) .

15. Method for operating an indirect reversible air conditioning circuit (1) according to Claim 10, according to a second de-icing mode in which only the second heat-transfer fluid loop (B) is in operation and in which the heat-transfer fluid passes in succession through:
∘ the pump (17),
∘ the heat exchanger (5) without exchanging enthalpy with the refrigerant fluid of the first refrigerant-fluid loop (A) owing to the fact that the latter is not in operation,
∘ the electric heating element (55) which is in operation,
and then where:
∘ a portion of the heat-transfer fluid circulating in the first circulation pipe (50) and passing through the third heat exchanger (54) and where the shut-off flap (310) is closed,
∘ another portion of the heat-transfer fluid circulates in the second circulation pipe (60) and passes through the fourth heat exchanger (64) .

16. Method for operating an indirect reversible air conditioning circuit (1) according to one of Claims 7 to 10, in a third de-icing mode in which only the second heat-transfer-fluid loop (B) is in operation, and in which the heat-transfer fluid passes in succession through:
∘ the pump (17),
∘ the heat exchanger (5) without exchanging enthalpy with the refrigerant fluid of the first refrigerant-fluid loop (A) owing to the fact that the latter is not in operation,
∘ the electric heating element (55) which is in operation,
all of the refrigerant fluid then passing through the second circulation pipe (60) and passing through the fourth heat exchanger (64).

17. Method for operating an indirect reversible air conditioning circuit (1) according to one of Claims 7 to 10 in an electric-heating mode in which only the second heat-transfer-fluid loop (B) is in operation and in which the heat-transfer fluid passes in succession through:
∘ the pump (17),
∘ the heat exchanger (5) without exchanging enthalpy with the refrigerant fluid of the first refrigerant-fluid loop (A) owing to the fact that the latter is not in operation,
∘ the electric heating element (55) which is in operation,
the heat-transfer fluid then circulating only in the first circulation pipe (50) and passing through the third heat exchanger (54).
